# EUROPEAN PATENT SPECIFICATION

(11) **EP 1 236 560 B1**
(45) Date of publication and mention of the grant of the patent: **28.07.2010**
(21) Application number: 02425042.5
(22) Date of filing: 30.01.2002
(51) Int. Cl.: B29C 47/88

(54) **Extrusion plant provided with extrusion head and cooling tank**
Extrusionsanlage versehen mit Extrusionskopf und Kühltank
Installation d'extrusion pourvue d'une tête d'extrusion et d'un réservoir d'eau fraîche

(30) Priority: 28.02.2001 IT MI010404
(43) Date of publication of application: 04.09.2002
(73) Proprietor: Gimac di Maccagnan Giorgio, 21040 Castronno (Varese) (IT)
(72) Inventor: Maccagnan, Giorgio, 21040 Castronno (Varese) (IT); Capelletti, Tiziano, 21020 Buguggiate (Varese) (IT)
(74) Representative: Tansini, Elio Fabrizio

(56) References cited:
- US-A- 4 211 741
- US-A- 5 622 665
- US-A- 5 945 048
- US-B1- 6 210 616
- PATENT ABSTRACTS OF JAPAN vol. 018, no. 219 (C-1192), 20 April 1994 (1994-04-20) -& JP 06 015004 A (MITSUBISHI CABLE IND LTD), 25 January 1994 (1994-01-25)

## Description

The present invention relates to an extrusion plant provided with a head, in which the extrusion plant provided with such a head is also susceptible of application in the microextrusion field.

It is known that manufacture of articles of particularly reduced sizes involves a series of technical problems that are not found in normal production of geometrically similar articles having however much greater sizes.

Generally, when articles of micrometric sizes are to be made, shaping of same proves to be particularly problematic, due to the fact that the reduced material to be worked and the very small measures and tolerances to be observed makes it very difficult to obtain products having given features; for the above reasons, often the production methodologies and apparatus used to make products having important sizes from a macroscopic point of view cannot be suitably "adapted" (by a scale reduction, for example) to production of similar articles typically having microscopic sizes.

A production field in which these operating difficulties are particularly felt is that of microextrusion; this production process is used to obtain articles of manufacture and/or semifinished products having the most varying uses in fields such as medicine and precision mechanics.

A particularly interesting example concerning articles produced by microextrusion is given by micro-pipes made of polymeric material, having features such as external diameters in the order of a few millimetres (or less) and diameters of the inner cavities to be estimated around some tenth of a millimetre (or less); more generally, in the microextrusion production field articles having cross sections of few square centimetres are manufactured which at the same time have a very high dimension accuracy.

For manufacture of these micro-pipes, generally a two-stage production plant is utilised; in the first stage a predetermined amount of polymeric material in a plastic state is caused to pass through an appropriate forming tool (so as to give the workpiece the desired tubular shape), and on coming out of this stage the workpiece thus formed is cooled so as to stabilize the obtained shape and enable stabilization of the polymeric material.

Obviously, such a production apparatus can be used with different polymeric materials, depending on the physico-chemical features that are wished to be given to the finished articles: micro-pipes of soft PVC, polyurethane, thermoplastic rubbers and others can be made.

Depending on the materials used and above all taking into consideration the very reduced sizes typical of these products, stabilisation of the micro-article thus formed is required to be completed without causing distortions or modifications in the shape of the product as formed in the first stage of the production process; at the same time the forming tool which practically is an extrusion head (or better an extrusion micro-head) must be maintained under such operating conditions that clogging as a result of solidification of the polymeric material inside it, is prevented.

In other words, while the extrusion micro-heads of known type must operate at such a temperature as to enable maintenance of the polymeric material in the fluid phase, cooling of the micro-section member obtained through the extrusion micro-head must be carried out in such a manner that deformations of the product due to thermal gradients and/or the concurrent action of the force of gravity are avoided. It should be noted at this point that these problems take a particular importance in the case of micro-extrusions, since the very reduced mass of plastic material employed is greatly subjected to a deforming action caused by environmental factors that obviously would be substantially of less influence in the case of "macroscopic" products.

It is therefore apparent that, in accordance with the known art, micro-heads for extrusion must be made with a material ensuring a good thermal conductivity, so that they can be constantly and evenly maintained to the desired operating temperature (micro-heads for extrusion made of steel are for example widespread).

For instance, during solidification of the extruded micro-product, it is required to avoid perturbation of the atmosphere around the workpiece, because even a light turbulence would involve convective heat exchanges and even aerodynamic actions capable of unacceptably distorting or twisting the workpiece itself, or even cause occlusion of the inner cavity of the hollow section members.

To conveniently cool the workpieces coming out of the extrusion micro-heads, the known art contemplates some plant typologies: in accordance with a first typology, the micro-workpiece from the extrusion micro-head is laid down on a moving mat and cooled by suitably-adjusted air jets.

An example of an extrusion process and apparatus can be seen in document US 6 210 616

The known art briefly described above however has some limits; in fact such a plant is of great accomplishment complexity due to the great sensitiveness of the workpiece to the turbulences that can occur in the cooling air.

The above involves a great waste of technical resources to monitor cooling; in addition, the micro-workpiece resting on the moving mat is in any case subjected to the deforming action of its own weight, since generally this moving mat operates in a horizontal direction. In addition, due to the fact that part of the workpiece rests on the moving mat, cooling by air is uneven since the workpiece portion in contact with the mat is not exposed to the cooling air (but rather this is the place where conductive heat exchanges with the moving mat take place).

In order to solve these drawbacks at least partly, a different plant typology was adopted in which the workpiece is caused to come out of the extrusion micro-head and is plunged into a water-containing tank.

In this way, cooling of the workpiece is more regular and quicker and in addition it is possible to counteract the deforming action due to the weight of the workpiece itself (since the hydrostatic water pressure occurs in an almost even manner over the whole outer surface of the workpiece); in addition, still for the purpose of avoiding undesired effects due to weight, the product can be extruded along a vertical direction and it can be plunged into the cooling tank "by drop".

This known technique too, however, has some problems that in this case are represented by the necessity to physically separate the extrusion micro-head from the cooling tank. It should be noted that this tank must be kept to a temperature capable of maintaining the polymeric material in the fluid phase (at least until this material leaves the head itself); therefore if the head should be put in contact with the cooling water, a temperature gradient would be set therein that would lead to an immediate clogging of the plant (because the polymeric material would solidify within the extrusion head, owing to the sudden temperature drop to which the head would be submitted due to water cooling).

The above described phenomena involve important operating and planning constraints in the manufacture of plants for micro-extrusion; substantially, some spacing between the extrusion micro-head and the cooling tank is to be taken into consideration. Unfortunately this involves temporary exposure of the workpiece to an open environment which can be hardly controlled (in other words, the workpiece must travel along a length exposed to the external environment starting from its coming out of the head until reaching the cooling tank); this introduces into the manufacturing process the already mentioned risks of generating distortions resulting from atmospheric turbulence, weight-related effects (in the case of workpieces extruded along a horizontal direction, for example), accidental water flows overflowing in the length exposed to air, close to the extrusion head and all other events that may act on the workpiece in an uncontrolled manner along the "free length" to be travelled over by the workpiece before it enters the cooling tank.

In short, the production technologies of known type involve a greater complexity of the manufacturing plants (in order to eliminate the great number of causes giving rise to the workpiece distortion still during the solidification step and also prevent binding) that ultimately negatively affect the production flexibility and economic advantage in operation, servicing and use of the plant itself.

Under this situation, the technical task underlying the present invention is to devise an extrusion plant capable of substantially obviating the above mentioned limits.

Mainly, it is an object of the present invention to devise an extrusion plant that can be adapted to production processes of micro-extrusion by only carrying out appropriate scale reductions.

Within the scope of this technical task it is an important aim of the invention to devise an extrusion plant capable of making articles of manufacture of any shape, while offering the desired accuracy features and preventing clogging phenomena.

In addition, the present invention aims at devising an extrusion plant having a head that can be positioned with great freedom relative to the cooling tanks, so as to minimize bulkiness and general complexity of the production plant itself.

Another important aim of the invention is to devise an extrusion plant of simple accomplishment and involving particularly reduced production costs.

The technical task mentioned and the aims specified are substantially achieved by an extrusion plant having the features set out in one or more of the appended claims.

A preferred by not exclusive embodiment of an extrusion head in accordance with the invention is now described by way of non-limiting example with the aid of the accompanying drawings, in which:
- Fig. 1 is a sectional side view of a plant comprising an extrusion head in accordance with the invention;

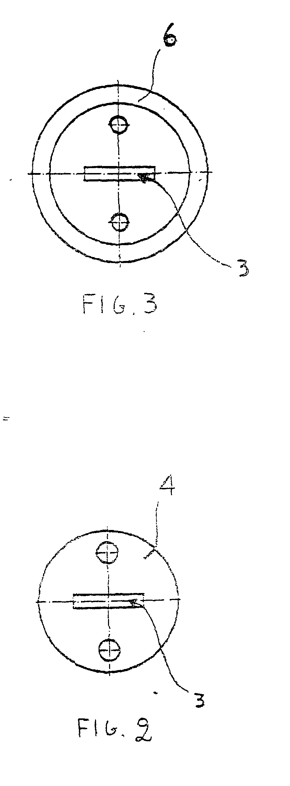

- Fig. 2 shows a head section taken along line II-II in Fig. 1;
- Fig. 3 shows a section taken along line III-III in Fig. 1; and
- Fig. 4 is an alternative embodiment of the head shown in Fig. 1.

With reference to the drawings, the extrusion head forming part of the invention is generally identified by reference numeral 1.

It substantially comprises a main body 2 and an auxiliary body 4. In turn, the main body 2 made of thermally conductive material, has an extruder duct 3 inside it (which passes through said body 2 along a specific operating direction that in turn can be oriented in a horizontal or vertical way or inclined to the ground, depending or requirements). Obviously, the extruder duct 3 extends starting from an inlet orifice 3a and goes on until an outlet orifice 3b from which the formed workpiece emerges. As can be seen in the accompanying drawings, the extruder duct 3 is practically defined by a flow surface 3c disposed internally of the main body 2.

Conveniently, the cross section of the extruder duct 3 can be of any form, depending on the shape to be given to the product; in addition, the passage area of the extruder duct can be substantially constant or varying (decreasing, for example) along its operating extension direction starting from the inlet orifice 3a and reaching the outlet orifice 3b.

In accordance with the present invention, the main body can be made of steel, to ensure the necessary mechanical-strength properties and the substantial resistance to chemical attacks (in the case of use of polymeric materials that are particularly active from a chemical point of view). Alternatively, it is at all events possible to use another material to make the main body, provided at least the essential requirement of thermal conductivity is met (for instance, the main body can be made of thermally conductive ceramic material).

As a matter of fact, the extruder duct 3 (which is formed within the main body) must be maintained, under operating conditions, to a temperature (referred to as extrusion temperature) enabling maintenance in the liquid phase of the polymeric material with which the extruded workpiece is wished to be made, so as to avoid binding of the plant. For this reason, the extruder duct must be maintained to a temperature at least as high as the melting temperature of the polymeric material being used and, for doing so, the necessary amount of thermal energy is required to be sent to the extruder duct 3 by conduction through the massive part of the main body 2.

Advantageously, the auxiliary body 4 is connected to the main body 2 and can be interposed, under operating conditions, between the main body 2 itself and the external environment, so as to prevent heat passage at least between the extruder duct 3 and the surrounding atmosphere.

To achieve the above illustrated function, the auxiliary body 4 is made of a thermally insulating material; in particular, the material chosen to make the auxiliary body 4 is of such a nature that it has a melting temperature and/or a temperature of physico/chemical degradation higher than the extrusion temperature of any article of manufacture to be made by extrusion through head 1 in accordance with the present invention (in particular, the auxiliary body 4 must not be submitted to deformations due to pressure and/or heat to which it is exposed). In other words, the material of which the auxiliary body 4 is made must be able to keep its physical integrity (i.e. it must remain in a solid aggregation state if exposed to temperatures causing melting of the polymeric material with which the micro-extruded workpieces are being made), as well as its chemical integrity (i.e. it must not be subjected to processes such as carbonisation, vulcanization or others capable of irreversibly modifying its physico-chemical properties).

By way of example, it is possible to say that if a polymeric material which is fluidized and extruded to a temperature of 180°C is selected for operation, the material of which the auxiliary body 4 is to be made must have a melting temperature higher than 180°C (so that it does not melt thereby losing its shape and not ensuring thermal insulation of the main body 2). In addition, the same material must not be subjected to chemical degradation or carbonisation at 180°C.

In accordance with the present invention, the auxiliary body 4 can be made of a wide variety of materials; for instance, the so-called PEEK material or PTFE material (also known under the commercial name of TEFLON) can be used. In addition or as an alternative to these two materials, also used can be, by way of example and depending on the present requirements, quartz, artificial diamond, electro-conductive ceramic material, thermo-insulating ceramic material or a predetermined thermosetting polymeric material. In making the auxiliary body 4, an appropriate combination of these substances can also be used, depending on current technical and/or economical requirements.

It should be also noted that the present invention, on the basis of the just described range of materials, is able to ensure a correct operation of the extrusion micro-head 1 with a very wide range of polymeric materials for extrusion. Obviously, the present invention is able to correctly operate in all cases in which the materials already mentioned with reference to the known art are used (polyurethanes, thermoplastic rubbers, soft and hot melt PVCs).

From a construction point of view, from the accompanying drawings it is possible to see that the main body first of all comprises a base element 5 of substantially prismatic conformation and a forming element or former 6 connected to the base element 5.

The base element 5 has an inner cavity defining a first section 3d of the extruder duct 3; conveniently, the first section 3d comprises the inlet orifice 3a and a first portion of the flow surface 3c.

On the other hand, the forming element 6 has a corresponding inner cavity, which in turn defines a second section 3e of the extruder duct. In particular, the second section 3e comprises the outlet orifice 3b and a second portion of the flow surface 3c (obviously, the first section 3d and second section 3e are brought into fluid communication so that, by mutual cooperation, they form the whole extruder duct 3).

For structural integrity of head 1, there is also the presence of fastening means 7 which is operatively active between the base element 5 and forming element 6 to keep them in a predetermined relative geometrical arrangement.

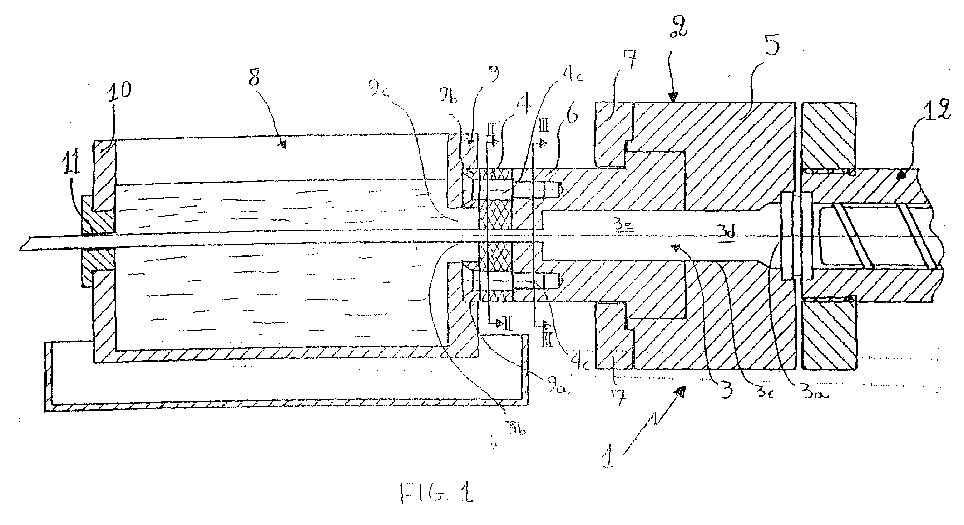

This fastening means 7 can be made in different manners (for instance, shown in Fig. 1 is an embodiment in which this means consists of a flange, which however can be replaced by a series of fastening nuts or any other interconnecting device of known type), provided it has sizes capable of withstanding the thermal and mechanical stresses to which head 1 is submitted during the production processes.

Advantageously, the auxiliary body 4 has a geometric conformation adapted to separate the extruder duct 3 from the surrounding atmosphere at least from a thermal point of view; in this way possible temperature drops are avoided; in fact said temperature drops would involve binding of head 1 following a sudden solidification of the polymeric material with which the micro-workpiece is being made.

The conformation of the auxiliary body 4 is determined depending on this operating feature; in other words, the auxiliary body 4 can have any shape, provided it can be interposed between the extruder duct 3 and the surrounding atmosphere. In accordance with the present invention, in addition, the auxiliary body 4 acts as a thermal-cutting element, inhibiting heat exchanges of a conductive nature that may take place between the external environment and the thermo-conductive mass of the main body 2.

It should be also appreciated that the present invention is dedicated to optimization of the geometry of the components forming the extrusion head 1; in particular, the conformation of the auxiliary body 4, as well as positioning of same relative to the main body 2, can be selected in the most appropriate manner, so as to prevent arising of heat exchanges in the most critical regions of the main body 2.

Taking into consideration the above statements, in accordance with a particularly advantageous embodiment of the present invention, the auxiliary body 4 can be substantially shaped as a laminar body (of a disc-shaped conformation, for example) and can be positioned close to the outlet orifice 3b of the extruder duct 3.
Conveniently, the auxiliary body 4 has a through cavity substantially positioned at the outlet orifice 3b (so as to enable extrusion of the micro-workpiece).

By virtue of this particular architecture, sudden temperature drops are avoided close to the outlet orifice 3b of the extruder duct 3 which in most cases of practical interest appears to be the most critical point (and consequently the one most exposed to clogging phenomena), because it is directly exposed to the external environment.

It should be noted, in fact, that the flow surface 3c of the extruder duct 3 is separated from the external environment by an important amount of thermally conductive material (because the base element 5 is a rather massive body) and therefore practically cannot be subjected to high thermal changes (obviously, provided head 1 is constantly maintained to a given temperature under operating conditions). Likewise, the inlet orifice 3a is connected, still under operating conditions, to a system supplying polymeric material in the fluid phase, and therefore it is separated from the external environment (and in addition it is exposed to a high temperature).

Turning back to the outlet orifice 3b, it should be noted that the forming element 6 housing it is, in terms of thichness, thinner than the base element; in addition, as also specified in the following, the operating requirement of cooling the micro-workpiece in order to stabilize its shape, involves exposure of the outlet orifice 3b (or even of the end portion of the extruder duct 3) to rather low temperatures. This can lead to a heat loss localized at the portion of the forming element 6 close to the outlet orifice 3b, and give rise to the already mentioned binding phenomena.

In accordance with the present invention, the particular positioning of the auxiliary body 4 prevents the region of the forming element 6 around the outlet orifice 3b from cooling, while at the same time enables exit of the extruded micro-article that, on the contrary, will be free to lose heat in an optimal manner.

Advantageously, the shape of the auxiliary body 4 can vary, depending on the operating modalities; for instance, the auxiliary body 4 may partly or fully circumscribe the forming element 6.

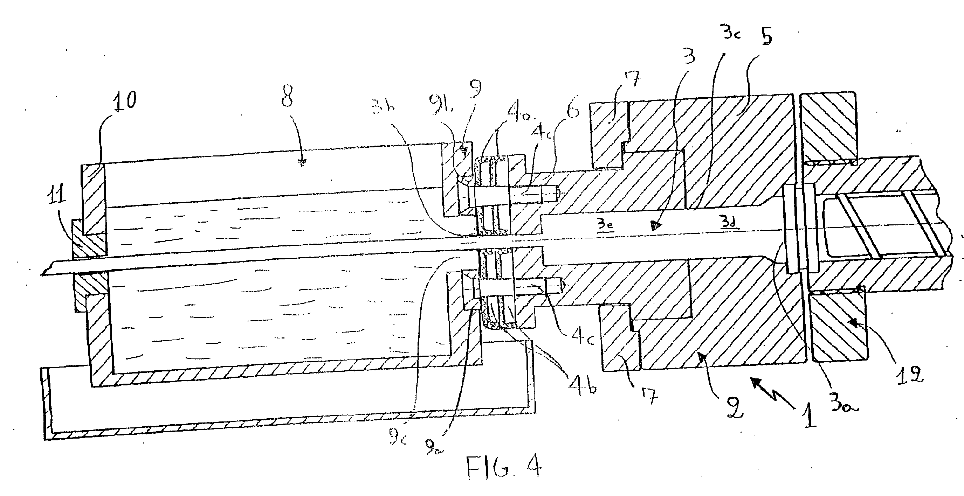

Still in the context of the present invention, the auxiliary body 4 can be also made following the particular construction architecture shown in Fig. 4: in this case, as can be seen, the auxiliary body 4 comprises a plurality of laminar elements 4a, suitably shaped and mutually interconnected so as to define thermally insulating gaps 4b (for instance, filled with insulating substances or even under vacuum). In this manner conductive heat exchanges are practically limited by the reduced contact surfaces between the laminar elements 4a (that can be also made of thermally conductive material, steel or aluminium for example, in addition to the previously listed materials), whereas convective heat exchanges are practically inhibited due to the presence of the thermally insulating gaps 4b.

Conveniently, should the auxiliary body 4 be made as a laminar body, it would have a thickness (in the extension direction of the extruder duct 3) proportional, according to a given factor, at least to the thermal conductivity of the thermo-insulating material of which the auxiliary body 4 itself is made and to the temperature difference between the external environment and the extrusion temperature to which the extruder duct 3 is maintained, under operating conditions. In accordance with the present invention, by suitably selecting said proportionality factor, different thicknesses can be calculated that will be chosen to make different auxiliary bodies 4 to be used in an interchangeable manner depending on current requirements.

Advantageously, the extrusion head 1 in accordance with the present invention further comprises a given number of interconnecting elements 4c which are operatively interposed between the auxiliary body 4 and at least the forming element 6 (see Fig. 1) to mutually connect them. Obviously, these interconnecting elements 4c that can be of any known type, are at all events selected and positioned in a manner adapted to constitute a possible passage channel for heat exchanges between the external environment and the forming element 6. Possibly, these interconnecting elements 4c can be thermally insulated, obviously depending on current requirements.

The extrusion head 1 further comprises thermal-conditioning means which is active at least on the base element 5 (and preferably on the forming element 6 as well) so that, under operating conditions, the temperature at least in the extruder duct 3 is maintained at least as high as the extrusion temperature of the workpiece. This thermal-conditioning means, not shown in the accompanying drawings, is well known and consists of heating elements (electric resistors, for example) and/or forced-ventilation systems (conveying air at given temperatures to head 1).

The present invention is a plant for carrying out extrusion operations which, by virtue of the peculiar features of the invention itself, can also easily adapt itself to production processes of micro-extrusion.

This plant comprises at least one extrusion head 1 (having one or more of the hitherto described features) and at least one cooling tank 8 which, in turn, holds a predetermined amount of coolant to enable cooling of the article of manufacture extruded through the head 1 itself. Typically, the coolant can be water, which is advantageous from an economical and practical point of view; at all events, if particular requirements make it necessary, the physical nature of the coolant can be varied so that the ratio of the specific weight of the extruded article to the specific weight of the liquid itself be included within a predetermined value range; also qualitatively and quantitatively varied can be the modalities for carrying out heat exchanges between the coolant and the extruded article, for example by adjusting the coolant to a temperature adapted to avoid thermal shocks (obviously depending on requirements).

Due to an appropriate selection of the coolant (carried out based on the above described criterion) the extrusion conditions can be optimized so as to minimize the deforming effects of the hydrostatic thrust on the length of the extruded (or micro-extruded) product coming out of head 1.

Advantageously, due to the structural features described above, the outlet orifice 3b of the extruder duct 3 in the plant in accordance with the present invention is substantially disposed so that it faces the inside of said cooling tank 8; according to this construction architecture (shown in Fig. 1), the auxiliary body 4 is operatively interposed between the coolant and the main body 2 and in this way inhibits heat exchanges between the main body 2 itself and the coolant. In other words, in the plant in accordance with the present invention, the extrusion head 1 can be connected almost directly with the cooling tank 8 without causing sudden temperature drops at the region of the extruder duct 3 which is the closest to the coolant mass (that in the absence of the auxiliary body 4 would withdraw an important amount of heat from the forming element 6, thereby greatly lowering the temperature of said element).

From a physical point of view, a direct exposure of the workpiece to the coolant, just out of the extrusion head 1, involves an important advantage: in fact, due to a sudden contact with the liquid, the outer part of the workpiece solidifies almost instantaneously and is subjected to thermal shrinkage. On the contrary, the inner part losing heat in a more progressive manner, tends to exert a uniform pressure on the solidified outer part of the workpiece; combination of these two uniform pressures helps in maintaining the cross-section of the workpiece, to the benefit of accuracy and finishing of the workpiece itself.

In more detail, the cooling tank 8 has an interfacing wall 9 designed to receive head 1, under operating conditions; said cooling tank 8 further comprises an exit wall 10 (opposite to the interfacing wall 9) carrying a discharge orifice 11, preferably coaxial with the outlet orifice 3b of the extruder duct 3, to enable exit of the extruded article, after its passage through the cooling tank 8 and after stably taking its established shape.

As can be viewed from Fig. 1, the interfacing wall 9 comprises a housing seat 9a designed to receive, under operating conditions, at least part of the interconnecting elements 4c (in particular, if the interconnecting elements 4a are stud bolts as shown in Fig. 1, their heads are received in the housing seat 9a in such a manner that they do not come into contact with the coolant); internally of the housing seat 9a there is a fastener 9b which is also connected to the auxiliary body 4 (by the same stud bolts 4c as shown in Fig. 1, for example).

Fastener 9b serves as a fitting element for correct coupling of head 1 with the cooling tank 8, but it may also be unnecessary, provided the auxiliary body 4 is suitably sized.

Conveniently, fastener 9b can have any shape (preferably, the shape of this fastener will partly match with that of the housing seat 9a), and at all events it has a passage port 9c axially centred relative to the outlet orifice 3b, which enables the coolant to directly graze the auxiliary body 4, around the outlet orifice 3b. In this way, the extruded article comes directly into contact with the coolant without passing through a section of the duct that can expose it to dangerous thermal gradients.

Consistently with the above description, if fastener 9b is not present, the housing seat 9a can be suitably shaped so that the portion of the auxiliary body 4 close to the outlet orifice 3b is directly exposed to the coolant; in other words, the passage port 9c can be directly formed in the housing seat 9a (see Fig. 1).

The present invention may advantageously involve a different structure of the plant as hitherto described; in fact, the interfacing wall 9 can be integrally passed through by the forming element 6 that in this way would be partly contained within the cooling tank 8 (and immersed in the coolant); in this case, in order to avoid cooling of the extruder duct, the auxiliary body 4 may fully surround at least that portion of the forming element 6 that is immersed in the cooling tank 8, or it may be even inserted into the forming element 6 so as to circumscribe the extruder duct 3 and at the same time surround the outlet orifice 3b.

Advantageously, the plant in accordance with the present invention can be indifferently used both for extrusions (or micro-extrusions) carried out along a horizontal progress line and for extrusions (or micro-extrusions) "by drop" in which the extruded (or micro-extruded) piece is ejected from head 1 which is vertically oriented above the cooling tank 8. Within the context of the present invention, the extrusion head may also be oriented in any intermediate position between the horizontal and vertical positions, depending or requirements.

For completion of the production plant in accordance with the present invention, appropriate delivery means 12 for the polymeric material to be extruded can obviously be installed (see Fig. 1 again); of course, this delivery means 12 is operatively active upstream of the inlet orifice 3a of the extruder duct 3 for admission thereto of a predetermined amount of polymeric material to be extruded, and may consist of any apparatus of known type (shown in Fig. 1, by way of example, is an Archimedes' screw held in a duct connected with the inlet orifice 3a).

The invention achieves important advantages.

It should be appreciated, first of all, that due to the peculiar construction architecture, both types of heads, i.e. for extruding pieces of macroscopic sizes and for micro-extrusions, can be indifferently made; in other words, the structural features of the present invention are applicable through mere adaptation of the geometrical measures of the different components, in the field of micro-extrusion and extrusion of bigger objets, without creating problems in terms of accuracy and finishing of the article of manufacture.

Secondly, it should be pointed out that the particular construction of the head for micro-extrusions as herein described and claimed allow a perfect maintenance of the ideal thermal conditions inside it, independently of the fact that part of the head is directly in contact with a mass of coolant at a greatly lower temperature; this enables compactness of the production plant to be maximized and above all eliminates the presence of the "free length" that the workpiece just extruded and still hot (and therefore externally deformable) must cover before being submitted to cooling in water.

It will be also appreciated that the materials selected for construction of the extrusion head in accordance with the present invention are of low costs and easily available on the market, which is advantageous in terms of working capacity and cost reduction.

In addition, the present invention allows use of a wide range of polymeric materials due to the physico-chemical features of its components (enabling the operating temperatures and pressures to be selected within a very wide range for working of the different polymeric materials as required).

Another advantage of the present invention is given by the fact that a wide variety of sections of the extrusion head can be accomplished without resorting to complicated working operations and without being obliged to use particularly expensive materials; this results once more in a great operating flexibility and an advantageously increased running of the production plant.

## Claims

1. An extrusion plant, comprising at least one extrusion head (1) comprising a main body (2) made of thermally conductive material and having an extruder duct (3) passing through said main body (2) along an operating direction starting from an inlet orifice (3a) until an outlet orifice (3b), said extruder duct (3) being defined by a flow surface (3c) disposed internally of the main body (2); said extrusion head (1) also comprising an auxiliary body (4) connected to the main body (2) and susceptible of being interposed, under operating conditions, between said main body (2) and the external environment to inhibit heat passage at least between the extruder duct (3) and the external environment; **characterised in that** it also comprises at least one cooling tank (8) containing a predetermined amount of coolant to enable cooling of an article of manufacture extruded through the head (1), the outlet orifice (3b) of the extruder duct (3) being disposed so that it substantially faces the inside of said cooling tank (8), and the auxiliary body (4) being operatively interposed between the coolant and the main body (2) to inhibit heat exchanges between the main body (2) and the coolant.

2. A plant as claimed in claim 1, **characterized in that** the auxiliary body (4) is made of PEEK.

3. A plant as claimed in claim 1, **characterized in that** the auxiliary body (4) is made of PTFE and/or quartz and/or artificial diamond and/or electrically conductive ceramic material and/or thermo-insulating ceramic material and/or a predetermined thermosetting polymeric material.

4. A plant as claimed in anyone of the preceding claims, **characterized in that** the main body (2) is made of steel, and/or thermo-conductive ceramic material and comprises:
- a base element (5) of substantially prismatic conformation having an inner cavity defining a first section (3d) of said extruder duct (3) , said first section (3d) comprising said inlet orifice (3a) and a first portion of said flow surface (3c); and
- a forming element or former (6) connected to said base element (5) and having an inner cavity defining a second section (3e) of the extruder duct, said second section (3e) comprising said outlet orifice (3b) and a second portion of the flow surface (3c).

5. A plant as claimed in claim 4, **characterized**
**in that** it further comprises fastening means (7) operatively active at least between said base element (5)
and forming element (6) to maintain them to a predetermined relative geometrical arrangement.

6. A plant as claimed in anyone of the preceding claims, **characterized in that** the auxiliary body (4) is positioned at least partly close to the outlet orifice (3b) of the extruder duct (3) and has a through cavity positioned substantially close to the outlet orifice (3b) itself.

7. A plant as claimed in anyone of the preceding claims, **characterized in that** the auxiliary body (4) comprises a plurality of laminar elements (4a) that are suitably shaped and mutually interconnected so as to define a given number of thermo-insulating gaps (4b).

8. A plant as in claim 6 or 7, **characterized in that** it further comprises a given number of interconnecting elements (4c) operatively interposed between the auxiliary body (4) and at least the forming element (6) to mutually engage them.

9. A plant as claimed in anyone of the preceding claims, **characterized in that** it further comprises thermo-conditioning means active at least on the base element (5) and preferably on the forming element (6) too, so that under operating conditions the temperature at least in the extruder duct (3) is maintained at least as high as the extrusion temperature of the workpiece.

10. A plant as claimed in anyone of the preceding claims, **characterized in that** the cooling tank (8) has an interfacing wall (9) designed to receive the head (1) under operating conditions, said cooling tank (8) further comprising an exit wall (10) opposite to said interfacing wall (9) and carrying a discharge orifice (11) preferably coaxial with the outlet orifice (3b) of the extruder duct (3) to enable exit of the extruded article.

11. A plant as claimed in anyone of the preceding claims, **characterized in that** the interfacing wall (9) comprises:
- a housing seat (9a) designed to receive, under operating conditions, at least part of the interconnecting elements (4c); and
- a fastener (9b) connected to the auxiliary body (4) and positioned at least partly within said housing seat (9a).

12. A plant as claimed in claim 11, **characterized in that** the fastener (9b) has a passage port (9c) axially centred relative to the outlet orifice (3b) to allow the coolant to directly graze the auxiliary body (4) around the outlet orifice (3b).

13. A plant as claimed in claim 11, **characterized in that** the housing seat (9a) comprises a passage port (9c) directly formed in the housing seat (9a) itself.

14. A plant as claimed in anyone of the preceding claims, **characterized in that** it further comprises delivery means (12) operatively active upstream of the inlet orifice (3a) of the extruder duct (3) for admission thereto of a predetermined amount of polymeric material to be extruded.

15. A plant as claimed in anyone of the preceding claims, **characterized in that** said coolant has such a specific weight that the specific weight of the coolant itself and the specific weight of the extruded article is included within a predetermined range of values.

## Patentansprüche

1. Extrusionsanlage, umfassend mindestens einen Extrusionskopf (1) mit einem Hauptkörper (2), der in wärmeleitendem Material ausgeführt ist und eine Extrusionsleitung (3) besitzt, die den Hauptkörper (2) längs einer Arbeitsrichtung ausgehend von einer Eingangsöffnung (3a) bis einer Ausgangsöffnung (3b) durchquert, wobei die Extrusionsleitung (3) durch eine Fliessfläche (3c) festgelegt ist, die innerhalb des Hauptkörpers (2) angeordnet ist; wobei der Extrusionskopf (1) überdies einen Hilfskörper (4) umfasst, der mit dem Hauptkörper (2) verbunden und unter Arbeitsbedingungen zwischen dem Hauptkörper (2) und der Außenumgebung zwischenschaltbar ist, um einen Wärmeübergang mindestens zwischen der Extrusionsleitung (3) und der Außenumgebung zu verhindern; **dadurch gekennzeichnet, dass** sie überdies mindestens eine Kühlwanne (8)umfasst, die eine vorgegebene Kühlflüssigkeitsmenge enthält, um die Kühlung eines Extrusionserzeugnisses durch den Kopf (1) hindurch zu erlauben, wobei die Ausgangsöffnung (3b) der Extrusionsleitung (3) derart angeordnet ist, dass sie im Wesentlichen ins Innere der Kühlwanne (8) gerichtet ist, und wobei der Hilfskörper (4) wirksam zwischen der Kühlflüssigkeit und dem Hauptkörper (2) zwischengeschaltet ist, um einen Wärmeaustausch zwischen dem Hauptkörper (2) und der Kühlflüssigkeit zu verhindern.

2. Extrusionsanlage nach Anspruch 1, **dadurch gekennzeichnet, dass** der Hilfskörper (4) in PEEK ausgeführt ist.

3. Extrusionsanlage nach Anspruch 1, **dadurch gekennzeichnet, dass** der Hilfskörper (4) aus PTFE und/oder Quarz und/oder synthetischem Diamant und/oder elektrisch leitender Keramik und/oder wärmedämmender Keramik und/oder einem vorgegebenen wärmehärtenden Polymermaterial besteht.

4. Extrusionsanlage nach einem beliebigen der vorstehenden Ansprüche, **dadurch gekennzeichnet, dass** der Hauptkörper (2) in Stahl und/oder in wärmeleitender Keramik ausgeführt ist, und umfasst:
- ein Basiselement (5) einer im Wesentlichen prismatischen Ausbildung, mit einem Innenhohlraum der einen ersten Abschnitt (3d) der Extrusionsleitung (3) festlegt, wobei der erste Abschnitt (3d) die Eingangsöffnung (3a) und einen ersten Teil der Fliessfläche (3c) aufweist; und
- ein Formelement (6), das mit dem Basiselement (5) verbunden ist und einen Innenhohlraum aufweist, der einen zweiten Abschnitt (3e) der Extrusionsleitung festlegt, wobei der zweite Abschnitt (3e) die Ausgangsöffnung (3b) und einen zweiten Teil der Fliessfläche (3c) umfasst.

5. Extrusionsanlage nach Anspruch 4, **dadurch gekennzeichnet, dass** sie überdies Befestigungsmittel (7) umfasst, die mindestens zwischen dem Basiselement (5) und dem Formelement (6) wirken, um sie in einer vorbestimmten geometrischen Anordnung zusammenzuhalten.

6. Extrusionsanlage nach einem beliebigen der vorstehenden Ansprüche, **dadurch gekennzeichnet, dass** der Hilfskörper (4) mindestens teilweise in der Nähe der Ausgangsöffnung (3b) der Extrusionsleitung (3) positioniert ist und einen durchgehenden Hohlraum aufweist, der im Wesentlichen im Bereich der Ausgangsöffnung (3e) selbst positioniert ist.

7. Extrusionsanlage nach einem beliebigen der vorstehenden Ansprüche, **dadurch gekennzeichnet, dass** der Hilfskörper (4) eine Vielzahl von lamellenförmigen Elementen (4a) umfasst, die zweckmäßig profiliert und miteinander derart verbunden sind, dass eine vorgegebene Anzahl von wärmedämmenden Zwischenräumen (4b) festgelegt wird.

8. Extrusionsanlage nach Anspruch 6 oder 7, **dadurch gekennzeichnet, dass** sie überdies eine vorgegebene Anzahl von Verbindungselementen (4c) umfasst, die wirksam zwischen dem Hilfskörper (4) und mindestens einem Formelement (6) zwischengeschaltet ist, um sie aneinander zu binden.

9. Extrusionsanlage nach einem beliebigen der vorstehenden Ansprüche, **dadurch gekennzeichnet, dass** sie überdies Wärmeklimamittel umfasst, die mindestens auf das Basiselement (5) und bevorzugter Weise auch auf das Formelement (6) wirken, um die Temperatur unter den Arbeitsbedingungen mindestens in der Extrusionsweitung (3) mindestens gleich der Extrusionstemperatur des Werkstückes aufrecht zu erhalten.

10. Extrusionsanlage nach einem beliebigen der vorstehenden Ansprüche, **dadurch gekennzeichnet, dass** die Kühlwanne (8) eine Trennwand (9) aufweist, die dazu bestimmt ist, unter Arbeitsbedingungen den Extrusionskopf aufzunehmen, wobei die Kühlwanne (8) überdies eine Ausgangswand (10) umfasst, die der Trennwand (9) gegenüberliegt und eine Ausladeöffnung (11) trägt, die bevorzugter Weise zur Ausgangsöffnung (3b) der Extrusionsleitung (3) koaxial ist, um den Austritt des Extrusionserzeugnisses zu erlauben.

11. Extrusionsanlage nach einem beliebigen der vorstehenden Ansprüche, **dadurch gekennzeichnet, dass** die Trennwand (9) umfasst:
- eine Aufnahme (9a), die dazu bestimmt ist, unter Arbeitsbedingungen mindestens einen Teil der Verbindungselemente (4c) aufzunehmen; und
- ein Befestigungselement (9b), das mit dem Hilfskörper (4) verbunden und mindestens teilweise innerhalb der Aufnahme (9a) positioniert ist.

12. Extrusionsanlage nach Anspruch 11, **dadurch gekennzeichnet, dass** das Befestigungselement (9b) einen Durchgangsschlitz (9c) aufweist, der axial genüber der Ausgangsöffnung (3b) zentriert ist, um der Kühlflüssigkeit zu erlauben, den Hilfskörper (4) um der Ausgangsöffnung (3b) selbst zu bespülen.

13. Extrusionsanlage nach Anspruch 11, **dadurch gekennzeichnet, dass** die Aufnahme (9a) einen Durchgangsschlitz (9c) umfasst, der unmittelbar in der Aufnahme (9a) selbst gebildet ist.

14. Extrusionsanlage nach einem beliebigen der vorstehenden Ansprüche, **dadurch gekennzeichnet, dass** sie überdies Fördermittel umfasst, die vor der Eingangsöffnung (3a) der Extrusionsleitung (3) wirken, um eine vorgegebene Menge an zu extrudierendem Polymermaterial einzubringen.

15. Extrusionsanlage nach einem beliebigen der vorstehenden Ansprüche, **dadurch gekennzeichnet, dass** die Kühlflüssigkeit ein derartig spezifisches Gewicht besitzt, dass das spezifische Gewicht der Kühlflüssigkeit selbst und das spezifische Gewicht des Extrusionserzeugnisses innerhalb einer vorgegebenen Wertespanne liegt.

## Revendications

1. Installation d'extrusion pourvue d'au moins une tête d'extrusion (1) comprenant un corps principal (2) réalisé en un matériau conducteur thermique et ayant un conduit d'extrusion (3) passant à travers ledit corps principal (2) le long d'une direction opérationnelle à partir d'un orifice d'entrée (3a) jusqu'à un orifice de sortie (3b), ledit conduit d'extrusion (3) étant défini par une surface d'écoulement (3c) disposée à l'intérieur du corps principal (2); ladite tête d'extrusion (1) comprenant également un corps auxiliaire (4) relié au corps principal (2) et en mesure d'être interposé, en conditions de fonctionnement, entre ledit corps principal (2) et le milieu extérieur pour empêcher le passage de la chaleur au moins entre le conduit d'extrusion (3) et le milieu extérieur; **caractérisée en ce qu'**elle comprend également au moins un réservoir de refroidissement (8) contenant une quantité prédéterminée de liquide réfrigérant pour permettre le refroidissement d'un article de production extrudé à travers la tête (1), l'orifice de sortie (3b) du conduit d'extrusion (3) étant disposé de sorte qu'il est essentiellement en vis-à-vis de l'intérieur dudit réservoir de refroidissement (8), et le corps auxiliaire (4) étant interposé de manière opérationnelle entre le liquide réfrigérant et le corps principal (2) pour interdire des échanges de chaleur entre le corps principal (2) et le liquide réfrigérant.

2. Installation selon la revendication 1, **caractérisée en ce que** le corps auxiliaire (4) est réalisé en PEEK.

3. Installation selon la revendication 1, **caractérisée en ce que** le corps auxiliaire (4) est réalisé en PTFE et/ou quartz et/ou diamant artificiel et/ou une matière céramique conductrice électrique et/ou une matière céramique d'isolation thermique et/ou un polymère prédéterminé thermodurcissable.

4. Installation selon l'une quelconque des revendications précédentes, **caractérisée en ce que** le corps principal (2) est réalisé en acier, et/ou une matière céramique conductrice électrique et comprend:
- un élément de base (5) de conformation sensiblement prismatique ayant une cavité intérieure définissant une première partie (3d) dudit conduit d'extrusion (3), ladite première partie (3d) comprenant ledit orifice d'entrée (3a) et une première portion de ladite surface d'écoulement (3c); et
- un élément de formation (6) relié audit élément de base (5) et ayant une cavité intérieure définissant une deuxième partie (3e) du conduit d'extrusion, ladite deuxième partie (3e) comprenant ledit orifice de sortie (3b) et une deuxième portion de la surface d'écoulement (3c).

5. Installation selon la revendication 4, **caractérisée en ce qu'**elle comprend en outre des moyens de fixation (7) agissant de manière opérationnelle au moins entre ledit élément de base (5) et l'élément de formation (6) pour les maintenir dans un arrangement géométrique relatif prédéterminé.

6. Installation selon l'une quelconque des revendications précédentes, **caractérisée en ce que** le corps auxiliaire (4) est positionné au moins partiellement à proximité de l'orifice de sortie (3b) du conduit d'extrusion (3) et a une cavité de passage positionnée sensiblement à proximité de l'orifice de sortie (3b) lui-même.

7. Installation selon l'une quelconque des revendications précédentes, **caractérisée en ce que** le corps auxiliaire (4) comprend une pluralité d'éléments laminaires (4a) qui sont conformés de manière convenable et reliés réciproquement à définir un nombre donné d'espaces d'isolation thermique (4b).

8. Installation selon la revendication 6 ou 7, **caractérisée en ce qu'**elle comprend en outre un nombre donné d'éléments d'interconnexion (4c) interposés de manière opérante entre le corps auxiliaire (4) et au moins l'élément de formation (6) pour les engager réciproquement.

9. Installation selon l'une quelconque des revendications précédentes, **caractérisée en ce qu'**elle comprend en outre des moyens de conditionnement thermique agissant au moins sur l'élément de base (5) et de préférence également sur l'élément de formation (6), de sorte qu'en conditions de fonctionnement la température au moins dans le conduit d'extrusion (3) est maintenue au moins égale à la température d'extrusion de l'article de fabrication.

10. Installation selon l'une quelconque des revendications précédentes, **caractérisée en ce que** le réservoir de refroidissement (8) présente une paroi d'interfaçage (9) destinée à recevoir la tête (1) en conditions de fonctionnement, ledit réservoir de refroidissement (8) comprenant en outre une paroi de sortie (10) opposée à ladite paroi d'interfaçage (9) et portant un orifice de déchargement (11) de préférence coaxial à l'orifice de sortie (3b) du conduit d'extrusion (3) pour permettre la sortie de l'article extrudé.

11. Installation selon l'une quelconque des revendications précédentes, **caractérisée en ce que** la paroi d'interfaçage (9) comprend:
- un siège de logement (9a) destiné à recevoir, en conditions de fonctionnement, au moins une partie des éléments d'interconnexion (4c); et
- un élément de fixation (9b) relié au corps auxiliaire (4) et positionné au moins partiellement dans ledit siège de logement (9a).

12. Installation selon la revendication 11, **caractérisée en ce que** l'élément de fixation (9b) présente une lumière de passage (9c) centrée en sens axial par rapport à l'orifice de sortie (3b) pour permettre au liquide réfrigérant d'effleurer directement le corps auxiliaire (4) autour de l'orifice de sortie (3b).

13. Installation selon la revendication 11, **caractérisée en ce que** le siège de logement (9a) comprend une lumière de passage (9c) formée directement dans le siège de logement (9a) lui-même.

14. Installation selon l'une quelconque des revendications précédentes, **caractérisée en ce qu'**elle comprend en outre des moyens de refoulement (12) agissant de manière opérante à l'amont de l'orifice d'entrée (3a) du conduit d'extrusion (3) pour l'introduction dans celui-ci d'une quantité prédéterminé de matériau de polymère à extruder.

15. Installation selon l'une quelconque des revendications précédentes, **caractérisée en ce que** ledit liquide réfrigérant a un poids spécifique de telle valeur que le poids spécifique du liquide réfrigérant lui-même et le poids spécifique de l'article extrudé sont inclus dans une gamme prédéterminée de valeurs.
